(19) Europäisches Patentamt
European Patent Office
Office européen des brevets

(11) **EP 4 063 971 A1**

(12) # EUROPEAN PATENT APPLICATION

(43) Date of publication:
**28.09.2022 Bulletin 2022/39**

(21) Application number: **21163900.0**

(22) Date of filing: **22.03.2021**

(51) International Patent Classification (IPC):
**G03H 1/00** (2006.01)    **G03H 1/04** (2006.01)

(52) Cooperative Patent Classification (CPC):
**G03H 1/0005; G03H 1/0443; G03H 1/0808;
G03H 1/0866; G06T 5/003; G06T 7/20;**
G03H 2001/0033; G03H 2001/005;
G03H 2001/0445

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **ASML Netherlands B.V.
5500 AH Veldhoven (NL)**

(72) Inventors:
• **COENE, Willem, Marie, Julia, Marcel
5500 AH veldhoven (NL)**
• **TENNER, Vasco, Tomas
5500 AH Veldhoven (NL)**
• **CRAMER, Hugo, Augustinus Joseph
5500 AH Veldhoven (NL)**

(74) Representative: **ASML Netherlands B.V.
Corporate Intellectual Property
P.O. Box 324
5500 AH Veldhoven (NL)**

(54) **DIGITAL HOLOGRAPHIC MICROSCOPE AND ASSOCIATED METROLOGY METHOD**

(57) Disclosed is a method of correcting a holographic image, a processing device, a dark field digital holographic microscope, a metrology apparatus and an inspection apparatus. The method comprises obtaining the holographic image; determining at least one damping envelope due to motion blur from the holographic image; and correcting the holographic image or a portion thereof using the at least one damping envelope.

Fig. 8

**Description**

FIELD

The present invention relates to digital holographic microscopy and in particular high speed dark field digital holographic microscopy and in relation to metrology applications in the manufacture of integrated circuits.

BACKGROUND

A lithographic apparatus is a machine constructed to apply a desired pattern onto a substrate. A lithographic apparatus can be used, for example, in the manufacture of integrated circuits (ICs). A lithographic apparatus may, for example, project a pattern (also often referred to as "design layout" or "design") at a patterning device (e.g., a mask) onto a layer of radiation-sensitive material (resist) provided on a substrate (e.g., a wafer).

To project a pattern on a substrate a lithographic apparatus may use electromagnetic radiation. The wavelength of this radiation determines the minimum size of features which can be formed on the substrate. Typical wavelengths currently in use are 365 nm (i-line), 248 nm, 193 nm and 13.5 nm. A lithographic apparatus, which uses extreme ultraviolet (EUV) radiation, having a wavelength within the range 4-20 nm, for example 6.7 nm or 13.5 nm, may be used to form smaller features on a substrate than a lithographic apparatus which uses, for example, radiation with a wavelength of 193 nm.

Low-ki lithography may be used to process features with dimensions smaller than the classical resolution limit of a lithographic apparatus. In such process, the resolution formula may be expressed as $CD = k_1 \times \lambda/NA$, where $\lambda$ is the wavelength of radiation employed, NA is the numerical aperture of the projection optics in the lithographic apparatus, CD is the "critical dimension" (generally the smallest feature size printed, but in this case half-pitch) and $k_1$ is an empirical resolution factor. In general, the smaller $k_1$ the more difficult it becomes to reproduce the pattern on the substrate that resembles the shape and dimensions planned by a circuit designer in order to achieve particular electrical functionality and performance. To overcome these difficulties, sophisticated fine-tuning steps may be applied to the lithographic projection apparatus and/or design layout. These include, for example, but not limited to, optimization of NA, customized illumination schemes, use of phase shifting patterning devices, various optimization of the design layout such as optical proximity correction (OPC, sometimes also referred to as "optical and process correction") in the design layout, or other methods generally defined as "resolution enhancement techniques" (RET). Alternatively, tight control loops for controlling a stability of the lithographic apparatus may be used to improve reproduction of the pattern at low k1.

During the manufacturing process there is a need to inspect the manufactured structures and/or to measure characteristics of the manufactured structures. Suitable inspection and metrology apparatuses are known in the art. One of the known metrology apparatuses is a dark field holographic microscope.

The holographic image obtained using a holographic microscope may be subject to motion blur due to object field drift and/or reference field drift; i.e., there may be lateral drift in the object optical path and in reference optical path. This lateral drift may be caused, for example, by stage drift and/or movement of optical elements and results in motion blur and less accurate images.

It is desirable to correct a holographic image for this object field drift and/or reference field drift.

SUMMARY

In a first aspect of the invention, there is provided a method of correcting a holographic image, comprising: obtaining the holographic image; determining a damping envelope due to motion blur from the holographic image; and correcting the holographic image or a portion thereof using the damping envelope; determining at least one damping envelope due to motion blur from the holographic image; and correcting the holographic image or a portion thereof using said at least one damping envelope.

In a second aspect of the invention, there is provided a dark field digital holographic microscope configured to determine a characteristic of interest of a structure, comprising: an illumination branch for providing illumination radiation to illuminate said structure; a detection arrangement for capturing object radiation resulting from diffraction of the illumination radiation by said structure; a reference branch for providing reference radiation for interfering with the object beam to obtain a holographic image; and a processing device operable to perform the method of the first aspect.

Also disclosed is processing device and associated program storage, and a computer program, each comprising instructions for a processor which cause the processor to perform the method of the first aspect.

BRIEF DESCRIPTION OF THE DRAWINGS

Embodiments of the invention will now be described, by way of example only, with reference to the accompanying schematic drawings, in which:

- Figure 1 depicts a schematic overview of a lithographic apparatus;
- Figure 2 depicts a schematic overview of a lithographic cell;
- Figure 3 depicts a schematic representation of holistic lithography, representing a cooperation between three key technologies to optimize semiconductor manufacturing;
- Figure 4 depicts a schematic overview of a scatterometry apparatus used as a metrology device, which may comprise a dark field digital holographic microscope according to embodiments of the invention;
- Figure 5 depicts schematically an example of a dark field digital holographic microscope operated in a sequential acquisition scheme adaptable using the concepts disclosed herein;
- Figure 6 depicts schematically a dark field digital holographic microscope (df-DHM) operable in a parallel acquisition scheme, which may be used to obtain holographic images that may be corrected using concepts disclosed herein;
- Figure 7 depicts schematically the transforming of a holographic image in real space to an image spectrum in the spatial frequency domain;
- Figure 8 depicts schematically the object and reference fields which combine to form a holographic image and the drift vectors to which they are subject;
- Figure 9 is a flow diagram of a method for correcting a holographic image according to an embodiment; and
- Figure 10 depicts a block diagram of a computer system for controlling a system and/or method as disclosed herein.

DETAILLED DESCRIPTION

In the present document, the terms "radiation" and "beam" are used to encompass all types of electromagnetic radiation, including ultraviolet radiation (e.g. with a wavelength of 365, 248, 193, 157 or 126 nm) and EUV (extreme ultra-violet radiation, e.g. having a wavelength in the range of about 5-100 nm).

The term "reticle", "mask" or "patterning device" as employed in this text may be broadly interpreted as referring to a generic patterning device that can be used to endow an incoming radiation beam with a patterned cross-section, corresponding to a pattern that is to be created in a target portion of the substrate. The term "light valve" can also be used in this context. Besides the classic mask (transmissive or reflective, binary, phase-shifting, hybrid, etc.), examples of other such patterning devices include a programmable mirror array and a programmable LCD array.

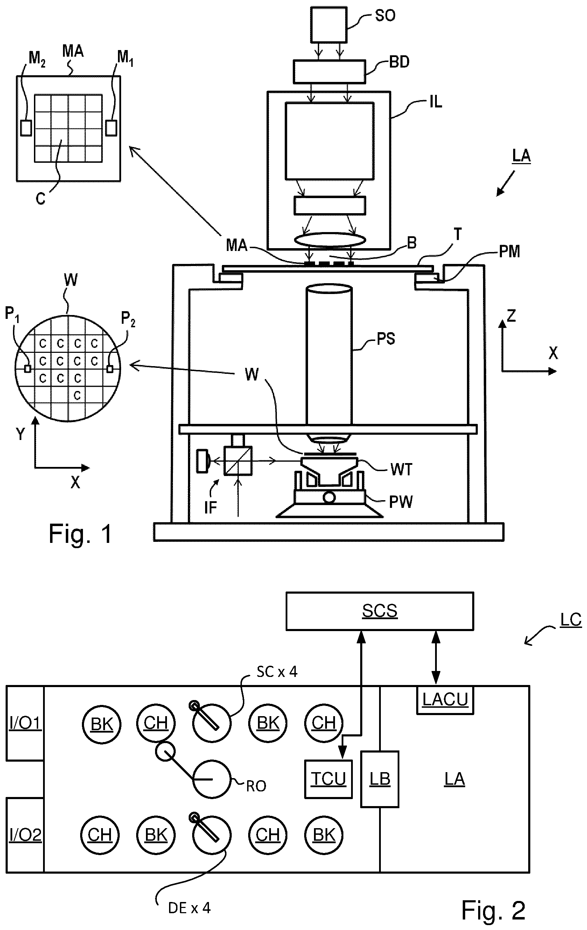

Figure 1 schematically depicts a lithographic apparatus LA. The lithographic apparatus LA includes an illumination system (also referred to as illuminator) ILL configured to condition a radiation beam B (e.g., UV radiation, DUV radiation or EUV radiation), a mask support (e.g., a mask table) MT constructed to support a patterning device (e.g., a mask) MA and connected to a first positioner PM configured to accurately position the patterning device MA in accordance with certain parameters, a substrate support (e.g., a wafer table) WT constructed to hold a substrate (e.g., a resist coated wafer) W and connected to a second positioner PW configured to accurately position the substrate support in accordance with certain parameters, and a projection system (e.g., a refractive projection lens system) PS configured to project a pattern imparted to the radiation beam B by patterning device MA onto a target portion C (e.g., comprising one or more dies) of the substrate W.

In operation, the illumination system ILL receives a radiation beam from a radiation source SO, e.g. via a beam delivery system BD. The illumination system ILL may include various types of optical components, such as refractive, reflective, magnetic, electromagnetic, electrostatic, and/or other types of optical components, or any combination thereof, for directing, shaping, and/or controlling radiation. The illuminator ILL may be used to condition the radiation beam B to have a desired spatial and angular intensity distribution in its cross section at a plane of the patterning device MA.

The term "projection system" PS used herein should be broadly interpreted as encompassing various types of projection system, including refractive, reflective, catadioptric, anamorphic, magnetic, electromagnetic and/or electrostatic optical systems, or any combination thereof, as appropriate for the exposure radiation being used, and/or for other factors such as the use of an immersion liquid or the use of a vacuum. Any use of the term "projection lens" herein may be considered as synonymous with the more general term "projection system" PS.

The lithographic apparatus LA may be of a type wherein at least a portion of the substrate may be covered by a liquid having a relatively high refractive index, e.g., water, so as to fill a space between the projection system PS and the substrate W - which is also referred to as immersion lithography. More information on immersion techniques is given in US6952253, which is incorporated herein by reference.

The lithographic apparatus LA may also be of a type having two or more substrate supports WT (also named "dual stage"). In such "multiple stage" machine, the substrate supports WT may be used in parallel, and/or steps in preparation of a subsequent exposure of the substrate W may be carried out on the substrate W located on one of the substrate support WT while another substrate W on the other substrate support WT is being used for exposing a pattern on the other substrate W.

In addition to the substrate support WT, the lithographic apparatus LA may comprise a measurement stage.

The measurement stage is arranged to hold a sensor and/or a cleaning device. The sensor may be arranged to measure a property of the projection system PS or a property of the radiation beam B. The measurement stage may hold multiple sensors. The cleaning device may be arranged to clean part of the lithographic apparatus, for example a part of the projection system PS or a part of a system that provides the immersion liquid. The measurement stage may move beneath the projection system PS when the substrate support WT is away from the projection system PS.

In operation, the radiation beam B is incident on the patterning device, e.g. mask, MA which is held on the mask support MT, and is patterned by the pattern (design layout) present on patterning device MA. Having traversed the mask MA, the radiation beam B passes through the projection system PS, which focuses the beam onto a target portion C of the substrate W. With the aid of the second positioner PW and a position measurement system IF, the substrate support WT can be moved accurately, e.g., so as to position different target portions C in the path of the radiation beam B at a focused and aligned position. Similarly, the first positioner PM and possibly another position sensor (which is not explicitly depicted in Figure 1) may be used to accurately position the patterning device MA with respect to the path of the radiation beam B. Patterning device MA and substrate W may be aligned using mask alignment marks M1, M2 and substrate alignment marks PI, P2. Although the substrate alignment marks PI, P2 as illustrated occupy dedicated target portions, they may be located in spaces between target portions. Substrate alignment marks PI, P2 are known as scribe-lane alignment marks when these are located between the target portions C.

As shown in Figure 2 the lithographic apparatus LA may form part of a lithographic cell LC, also sometimes referred to as a lithocell or (litho)cluster, which often also includes apparatus to perform pre- and post-exposure processes on a substrate W. Conventionally these include spin coaters SC to deposit resist layers, developers DE to develop exposed resist, chill plates CH and bake plates BK, e.g. for conditioning the temperature of substrates W e.g. for conditioning solvents in the resist layers. A substrate handler, or robot, RO picks up substrates W from input/output ports I/O1, I/O2, moves them between the different process apparatus and delivers the substrates W to the loading bay LB of the lithographic apparatus LA. The devices in the lithocell, which are often also collectively referred to as the track, are typically under the control of a track control unit TCU that in itself may be controlled by a supervisory control system SCS, which may also control the lithographic apparatus LA, e.g. via lithography control unit LACU.

In order for the substrates W exposed by the lithographic apparatus LA to be exposed correctly and consistently, it is desirable to inspect substrates to measure properties of patterned structures, such as overlay errors between subsequent layers, line thicknesses, critical dimensions (CD), etc. For this purpose, inspection tools (not shown) may be included in the lithocell LC. If errors are detected, adjustments, for example, may be made to exposures of subsequent substrates or to other processing steps that are to be performed on the substrates W, especially if the inspection is done before other substrates W of the same batch or lot are still to be exposed or processed.

An inspection apparatus, which may also be referred to as a metrology apparatus, is used to determine properties of the substrates W, and in particular, how properties of different substrates W vary or how properties associated with different layers of the same substrate W vary from layer to layer. The inspection apparatus may alternatively be constructed to identify defects on the substrate W and may, for example, be part of the lithocell LC, or may be integrated into the lithographic apparatus LA, or may even be a stand-alone device. The inspection apparatus may measure the properties on a latent image (image in a resist layer after the exposure), or on a semi-latent image (image in a resist layer after a post-exposure bake step PEB), or on a developed resist image (in which the exposed or unexposed parts of the resist have been removed), or even on an etched image (after a pattern transfer step such as etching).

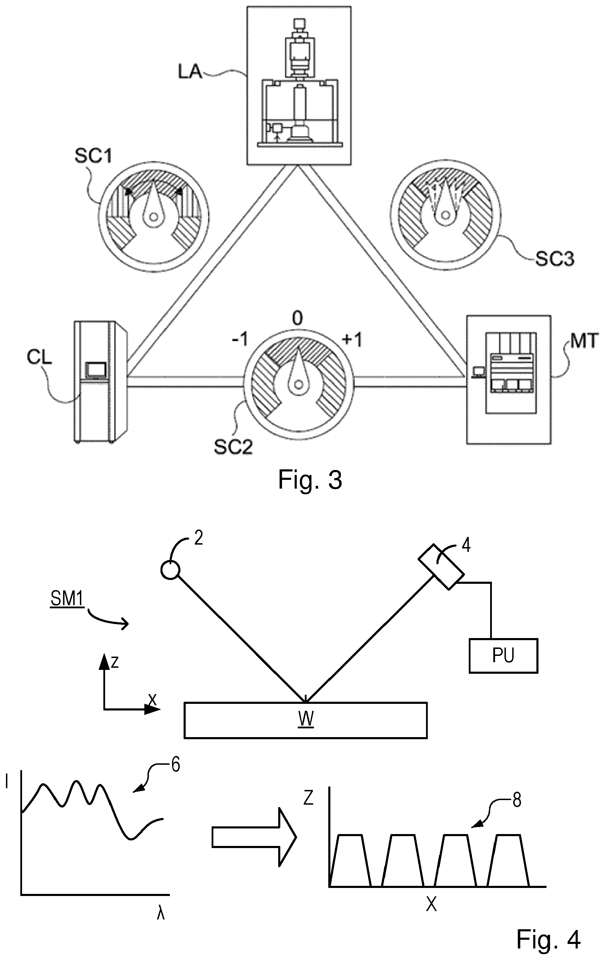

Typically the patterning process in a lithographic apparatus LA is one of the most critical steps in the processing which requires high accuracy of dimensioning and placement of structures on the substrate W. To ensure this high accuracy, three systems may be combined in a so called "holistic" control environment as schematically depicted in Fig. 3. One of these systems is the lithographic apparatus LA which is (virtually) connected to a metrology tool MT (a second system) and to a computer system CL (a third system). The key of such "holistic" environment is to optimize the cooperation between these three systems to enhance the overall process window and provide tight control loops to ensure that the patterning performed by the lithographic apparatus LA stays within a process window. The process window defines a range of process parameters (e.g. dose, focus, overlay) within which a specific manufacturing process yields a defined result (e.g. a functional semiconductor device) - typically within which the process parameters in the lithographic process or patterning process are allowed to vary.

The computer system CL may use (part of) the design layout to be patterned to predict which resolution enhancement techniques to use and to perform computational lithography simulations and calculations to determine which mask layout and lithographic apparatus settings achieve the largest overall process window of the patterning process (depicted in Fig. 3 by the double arrow in the first scale SC1). Typically, the resolution enhancement techniques are arranged to match the patterning possibilities of the lithographic apparatus LA. The computer system CL may also be used to detect where within the process window the lithographic apparatus LA is currently operating (e.g. using input from the metrology tool MT) to predict whether defects may be present due to e.g. sub-optimal processing (depicted in Fig. 3 by the arrow pointing "0" in the second scale SC2).

The metrology tool MT may provide input to the computer system CL to enable accurate simulations and predictions, and may provide feedback to the lithographic apparatus LA to identify possible drifts, e.g. in a calibration status of the lithographic apparatus LA (depicted in Fig. 3 by the multiple arrows in the third scale SC3).

In lithographic processes, it is desirable to make frequently measurements of the structures created, e.g., for process control and verification. Tools to make such measurement are typically called metrology tools MT. Different types of metrology tools MT for making such measurements are known, including scanning electron microscopes or various forms of scatterometer metrology tools MT. Scatterometers are versatile instruments which allow measurements of the parameters of a lithographic process by having a sensor in the pupil or a conjugate plane with the pupil of the objective of the scatterometer, measurements usually referred as pupil based measurements, or by having the sensor in the image plane or a plane conjugate with the image plane, in which case the measurements are usually referred as image or field based measurements. Such scatterometers and the associated measurement techniques are further described in patent applications US20100328655, US2011102753A1, US20120044470A, US20110249244, US20110026032 or EP1,628,164A, incorporated herein by reference in their entirety. Aforementioned scatterometers may measure gratings using light from soft x-ray and visible to near-IR wavelength range.

In a first embodiment, the scatterometer MT is an angular resolved scatterometer. In such a scatterometer reconstruction methods may be applied to the measured signal to reconstruct or calculate properties of the grating. Such reconstruction may, for example, result from simulating interaction of scattered radiation with a mathematical model of the target structure and comparing the simulation results with those of a measurement. Parameters of the mathematical model are adjusted until the simulated interaction produces a diffraction pattern similar to that observed from the real target.

In a second embodiment, the scatterometer MT is a spectroscopic scatterometer MT. In such spectroscopic scatterometer MT, the radiation emitted by a radiation source is directed onto the target and the reflected or scattered radiation from the target is directed to a spectrometer detector, which measures a spectrum (i.e. a measurement of intensity as a function of wavelength) of the specular reflected radiation. From this data, the structure or profile of the target giving rise to the detected spectrum may be reconstructed, e.g. by Rigorous Coupled Wave Analysis and non-linear regression or by comparison with a library of simulated spectra.

In a third embodiment, the scatterometer MT is a ellipsometric scatterometer. The ellipsometric scatterometer allows for determining parameters of a lithographic process by measuring scattered radiation for each polarization states. Such metrology apparatus emits polarized light (such as linear, circular, or elliptic) by using, for example, appropriate polarization filters in the illumination section of the metrology apparatus. A source suitable for the metrology apparatus may provide polarized radiation as well. Various embodiments of existing ellipsometric scatterometers are described in US patent applications 11/451,599, 11/708,678, 12/256,780, 12/486,449, 12/920,968, 12/922,587, 13/000,229, 13/033,135, 13/533,110 and 13/891,410 incorporated herein by reference in their entirety.

In one embodiment of the scatterometer MT, the scatterometer MT is adapted to measure the overlay of two misaligned gratings or periodic structures by measuring asymmetry in the reflected spectrum and/or the detection configuration, the asymmetry being related to the extent of the overlay. The two (typically overlapping) grating structures may be applied in two different layers (not necessarily consecutive layers), and may be formed substantially at the same position on the wafer. The scatterometer may have a symmetrical detection configuration as described e.g. in co-owned patent application EP1,628,164A, such that any asymmetry is clearly distinguishable. This provides a straightforward way to measure misalignment in gratings. Further examples for measuring overlay error between the two layers containing periodic structures as target is measured through asymmetry of the periodic structures may be found in PCT patent application publication no. WO 2011/012624 or US patent application US 20160161863, incorporated herein by reference in its entirety.

Other parameters of interest may be focus and dose. Focus and dose may be determined simultaneously by scatterometry (or alternatively by scanning electron microscopy) as described in US patent application US2011-0249244, incorporated herein by reference in its entirety. A single structure may be used which has a unique combination of critical dimension and sidewall angle measurements for each point in a focus energy matrix (FEM - also referred to as Focus Exposure Matrix). If these unique combinations of critical dimension and sidewall angle are available, the focus and dose values may be uniquely determined from these measurements.

A metrology target may be an ensemble of composite gratings, formed by a lithographic process, mostly in resist, but also after etch process for example. Typically the pitch and line-width of the structures in the gratings strongly depend on the measurement optics (in particular the NA of the optics) to be able to capture diffraction orders coming from the metrology targets. As indicated earlier, the diffracted signal may be used to determine shifts between two layers (also referred to 'overlay') or may be used to reconstruct at least part of the original grating as produced by the lithographic process. This reconstruction may be used to provide guidance of the quality of the lithographic process and may be used to control at least part of the lithographic process. Targets may have smaller sub-segmentation which are configured to mimic dimensions of the functional part of the design layout in a target. Due to this sub-segmentation, the targets will behave more similar to the functional part of the design layout such that the overall process parameter measurements resembles the functional part of the design layout better. The targets may be measured in an underfilled mode or in an overfilled mode. In the underfilled mode, the measurement beam generates a spot that is smaller than the overall target. In the overfilled mode, the measurement beam generates a spot that is larger than the overall target. In such overfilled mode, it may also be possible to measure different targets simultaneously, thus determining different processing parameters at the same time.

Overall measurement quality of a lithographic parameter using a specific target is at least partially determined by the measurement recipe used to measure this lithographic parameter. The term "substrate measurement recipe" may include one or more parameters of the measurement itself, one or more parameters of the one or more patterns measured, or both. For example, if the measurement used in a substrate measurement recipe is a diffraction-based optical measurement, one or more of the parameters of the measurement may include the wavelength of the radiation, the polarization of the radiation, the incident angle of radiation relative to the substrate, the orientation of radiation relative to a pattern on the substrate, etc. One of the criteria to select a measurement recipe may, for example, be a sensitivity of one of the measurement parameters to processing variations. More examples are described in US patent application US2016-0161863 and published US patent application US 2016/0370717A1 incorporated herein by reference in its entirety.

A metrology apparatus, such as a scatterometer, is depicted in Figure 4. It comprises a broadband (white light) radiation projector 2 which projects radiation onto a substrate W. The reflected or scattered radiation is passed to a spectrometer detector 4, which measures a spectrum 6 (i.e. a measurement of intensity as a function of wavelength) of the specular reflected radiation. From this data, the structure or profile 8 giving rise to the detected spectrum may be reconstructed by processing unit PU, e.g. by Rigorous Coupled Wave Analysis and non-linear regression or by comparison with a library of simulated spectra as shown at the bottom of Figure 3. In general, for the reconstruction, the general form of the structure is known and some parameters are assumed from knowledge of the process by which the structure was made, leaving only a few parameters of the structure to be determined from the scatterometry data. Such a scatterometer may be configured as a normal-incidence scatterometer or an oblique-incidence scatterometer.

Overall measurement quality of a lithographic parameter via measurement of a metrology target is at least partially determined by the measurement recipe used to measure this lithographic parameter. The term "substrate measurement recipe" may include one or more parameters of the measurement itself, one or more parameters of the one or more patterns measured, or both. For example, if the measurement used in a substrate measurement recipe is a diffraction-based optical measurement, one or more of the parameters of the measurement may include the wavelength of the radiation, the polarization of the radiation, the incident angle of radiation relative to the substrate, the orientation of radiation relative to a pattern on the substrate, etc. One of the criteria to select a measurement recipe may, for example, be a sensitivity of one of the measurement parameters to processing variations. More examples are described in US patent application US2016-0161863 and published US patent application US 2016/0370717A1 incorporated herein by reference in its entirety.

In order to monitor the lithographic process, parameters of the patterned substrate are measured. Parameters may include, for example, the overlay error between successive layers formed in or on the patterned substrate. This measurement may be performed on a product substrate and/or on a dedicated metrology target. There are various techniques for making measurements of the microscopic structures formed in lithographic processes, including the use of scanning electron microscopes and various specialized tools. A fast and non-invasive form of specialized inspection tool is a scatterometer in which a beam of radiation is directed onto a target on the surface of the substrate and properties of the scattered or reflected beam are measured.

Examples of known scatterometers include angle-resolved scatterometers of the type described in US2006033921A1 and US2010201963A1. The targets used by such scatterometers are relatively large, e.g., 40μm by 40μm, gratings and the measurement beam generates a spot that is smaller than the grating (i.e., the grating is underfilled). In addition to measurement of feature shapes by reconstruction, diffraction based overlay can be measured using such apparatus, as described in published patent application US2006066855A1. Diffraction-based overlay metrology using dark field imaging of the diffraction orders enables overlay measurements on smaller targets. Examples of dark field imaging metrology can be found in international patent applications WO 2009/078708 and WO 2009/106279 which documents are hereby incorporated by reference in their entirety. Further developments of the technique have been described in published patent publications US20110027704A, US20110043791A, US2011102753A1, US20120044470A, US20120123581A, US20130258310A, US20130271740A and WO2013178422A1. These targets can be smaller than the illumination spot and may be surrounded by product structures on a wafer. Multiple gratings can be measured in one image, using a composite grating target. The contents of all these applications are also incorporated herein by reference.

In a diffraction-based dark field metrology device, a beam of radiation is directed onto a metrology target and one or more properties of the scattered radiation are measured so as to determine a property of interest of the target. The properties of the scattered radiation may comprise, for example, intensity at a single scattering angle (e.g., as a function of wavelength) or intensity at one or more wavelengths as a function of scattering angle.

Measurement of targets in dark field metrology may comprise, for example, measuring the a first intensity of

the 1st diffraction order I+i and a second intensity of the -1st diffraction order ($I_{-1}$) and calculating an intensity asymmetry ($A = I_{+1} - I_{-1}$), which is indicative of asymmetry in the target. The metrology targets may comprise one or more grating structures from which a parameter of interest may be inferred from such intensity asymmetry measurements, e.g., the targets are designed such that the asymmetry in the target varies with the parameter of interest. For example, in overlay metrology a target may comprise at least one composite grating formed by at least a pair of overlapping sub-gratings that are patterned in different layers of the semiconductor device. Asymmetry of the target will therefore be dependent on alignment of the two layers and therefore overlay. Other targets may be formed with structures which are exposed with different degrees of variation based on the focus setting used during the exposure; the measurement of which enabling that focus setting to be inferred back (again through intensity asymmetry).

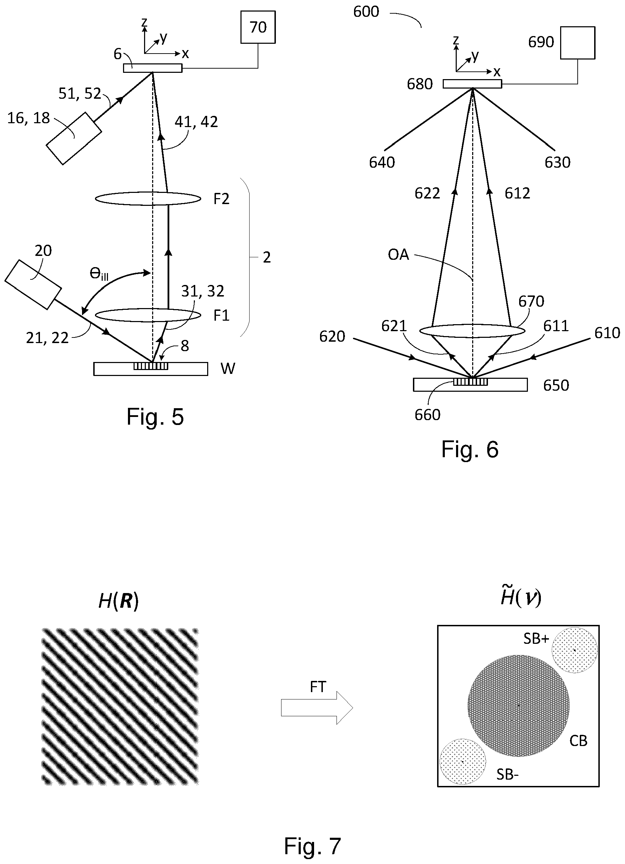

The international patent application WO2019197117A1, incorporated herein by reference, discloses a method and metrology apparatus based on a dark field digital holographic microscope (df-DHM) to determine a characteristic, e.g., overlay, of a structure manufactured on a substrate. Such an apparatus may be used to obtain holographic images to which the methods disclosed herein may be performed to correct the holographic images for stage drift and/or other drift parameters. However, the holographic images may be obtained by any holographic microscope or metrology tool, whether dark field or bright field. For the purpose of description, Figure 3 of the international patent application WO2019197117A1 is replicated in Figure 5. Figure 5 schematically illustrates the disclosed df-DHM specifically adapted for use in lithographic process metrology.

The df-DHM in Figure 5 further comprises a reference optical unit 16, 18 which is used to provide additional two reference radiation beams 51, 52 (the reference radiation). Such two reference radiation beams 51, 52 are respectively paired with two corresponding portions 41, 42 of the scattered radiation beams 31, 32 (the object radiation). The two scattered-reference beam pairs are used sequentially to form two interference patterns. Coherence control is provided by way of adjusting the relative optical path-length difference (OPD) between the two scattered-reference beams within each beam pair. However, no coherence control is available between the two beam pairs.

Due to the use of a single light source and insufficient coherence control, all four radiation beams, i.e. the first portion 41 of the scattered radiation 31, the first reference radiation 51, the second portion 42 of the scattered radiation 32 and the second reference radiation 52, are mutually coherent. If these four mutually coherent radiation beams were allowed to reach the same position of the sensor 6 at the same time, namely operating in a parallel acquisition scheme, multiple interference patterns comprising desired information containing patterns and undesired artefact-contributing patterns would overlap each other. The undesired interference patterns may be formed by interference between e.g., the portion 41 of the first scattered radiation 31 and the portion 42 of the second scattered radiation 32. Since it would be technically challenging and time consuming to completely separate the superimposed interference patterns, parallel acquisition is impractical this arrangement.

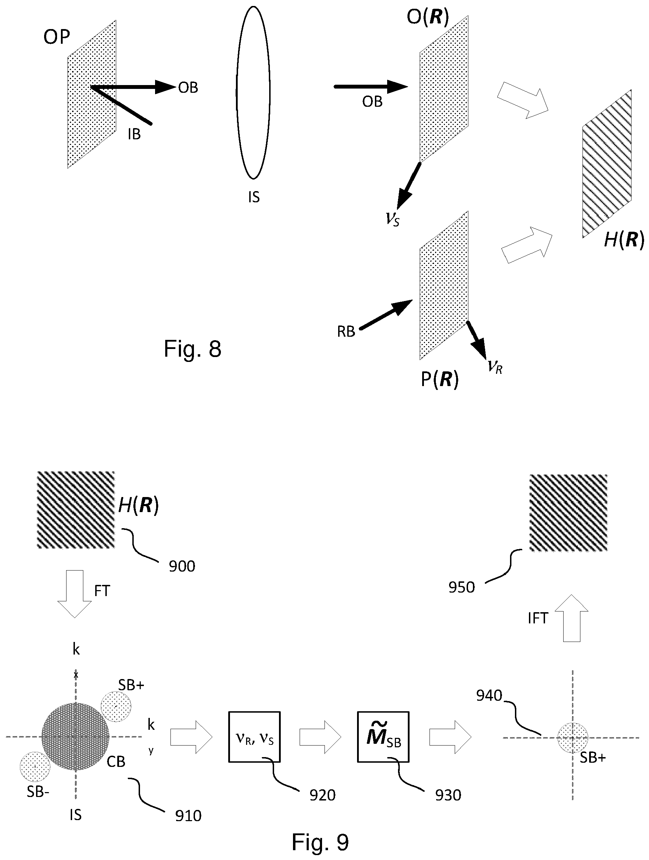

Similar to the example of Figure 8, the use of a sequential acquisition scheme in the example of Figure 5 allows the full NA of the objective lens to be available for both illumination and detection. However, the system suffers the same problem of low measurement speed due to sequential acquisition. Therefore, it is desirable to have a df-DHM capable of performing parallel acquisition such that a high measurement speed and a high design flexibility can be simultaneously obtained.

Figure 6 schematically illustrates the imaging branch of a dark field digital holographic microscope (df-DHM) 600 in accordance with an embodiment. A dark field digital holographic microscope (df-DHM) comprises an imaging branch and an illumination branch. In this embodiment, a metrology target 660 comprising a structure on a substrate 650 is illuminated by two illumination beams of radiation, i.e., a first illumination beam of radiation 610 and a second illumination beam of radiation 620. In an embodiment, such two illumination beams 610, 620 may simultaneously illuminate the metrology target 660.

In an embodiment, the first illumination beam 610 may be incident on the metrology target 660 at a first angle of incidence in a first direction with respect to the optical axis OA. The second illumination beam 620 may be incident on the metrology target 660 at a second angle of incidence in a second direction with respect to the optical axis OA. The first angle of incidence of the first illumination beam 610 and the second angle of incidence of the second illumination beam 620 may be substantially the same. The angle of incidence of each illumination beam may be, for example in the range of 70 degrees to 90 degrees, in the range of 50 degrees to 90 degrees, in the range of 30 degrees to 90 degrees, in the range of 6 degrees to 90 degrees. The illumination of the metrology target 660 may result in radiation being scattered from the target. In an embodiment, the first illumination beam 610 may be incident on the metrology target 660 at a first azimuthal angle, corresponding to the first direction. The second illumination beam 620 may be incident on the metrology target 660 at a second azimuthal angle, corresponding to the second direction. The first azimuthal angle of the first illumination beam 610 and the second azimuthal angle of the second illumination beam 620 may be different; e.g., opposing angles 180 degrees apart.

Depending on the structure of the metrology target 660, the scattered radiation may comprise reflected radiation, diffracted radiation or transmitted radiation. In this embodiment, the metrology target may be a diffraction-based overlay target; and each illumination beam may correspond to a scattered beam comprising at least one non-zeroth diffraction order. Each scattered beam carries information of the illuminated metrology target. For example, the first illumination beam 610 may correspond to the first scattered beam 611 comprising the positive first diffraction order +1st DF; the second illumination beam 620 may correspond to the second scattered beam 621 comprising the negative first diffraction order -1st DF. The zeroth diffraction order and other undesired diffraction orders may either be blocked by a beam blocking element (not shown) or configured to completely fall outside the NA of the objective lens 670. As a result, the df-DHM may be operated in a dark field mode. Note that, in some embodiments, one or more optical elements, e.g., a lens combination, may be used to achieve same optical effect of the objective lens 670.

Both scattered beams 611, 621 may be collected by objective lens 670 and subsequently refocused onto an image sensor 680. Objective lens 670 may comprise multiple lenses, and/or df-DHM 600 may comprise a lens system having two or more lenses, e.g., an objective lens and an imaging lens similar to the exemplary df-DHG of Figure 5, thereby defining a pupil plane of the objective lens between the two lenses and an image plane at the focus of the imaging lens. In this embodiment, a portion 612 of the first scattered beam 611 and a portion 622 of the second scattered beam 621 are simultaneously incident at a common position of the image sensor 680. At the same time, two reference beams of radiation, i.e. a first reference beam 630 and a second reference beam 640, are incident on the same position of the image sensor 680. Such four beams may be grouped into two pairs of scattered radiation and reference radiation. For example, the first scattered-reference beam pair may comprise the portion 612 of the first scattered beam 611 and the first reference beam 630. Likewise, the portion 622 of the second scattered-reference beam pair may comprise the second scattered beam 621 and the second reference beam 640. These two scattered-reference beam pairs may subsequently form two interference patterns (holographic images) which at least partially overlap in spatial domain.

In an embodiment, in order to separate the two at least partially, spatially overlapping interference patterns (e.g., in the spatial frequency domain), the first reference beam 630 may have a first angle of incidence with respect to the optical axis OA and the second reference beam 640 may have a second angle of incidence with respect to the optical axis OA; the first angle of incidence and the second angle of incidence being different. Alternatively or in addition, the first reference beam 630 may have a first azimuthal angle with respect to the optical axis OA and the second reference beam 640 may have a second azimuthal angle with respect to the optical axis OA; the first and second azimuthal angles being different.

In order to generate an interference pattern, the two beams of each scattered-reference beam pair should be at least partially coherent to each other, to a degree which is sufficient to form an interference pattern. Note that each scattered radiation beam may have a phase offset with respect to its corresponding illumination radiation. For example, at the image plane of the image sensor 680, such a phase offset may comprise contributions due to the optical path-length (OPD) from the metrology target 660 to the image sensor 680, and by the interaction with the metrology target.

The processing unit 690 may be a computer system. The computer system may be equipped with an image reconstruction algorithm which is used to perform all the aforementioned tasks, comprising performing Fourier transform, extracting each individual high order spatial spectrum, performing inverse Fourier transform, calculating complex fields and determining a characteristic of the structure based on the results.

Stage-drift affects the quality of the retrieved information in Off-Axis Holography (OAH) for overlay (or other parameter of interest) metrology. One solution is to invest in high-quality low-drift sample stages and high-stability reference beam positioning. Another solution is to use interferometry to monitor stage drift as is applied in the scanner, and actively compensate for that. Both these solutions come at an appreciable cost. Stage-drift may severely affect the inference of reproducible overlay data.

Off-axis holography such as provided by the tools illustrated in Figures 5 and 6, has the unique feature of offering a direct measurement of amplitude and phase via the sidebands. This property offers a direct means for aberration correction via the measured complex-valued wavefront (wave or field) in the sideband. A pair of sidebands (i.e., high order spatial spectra) are generated through interference between the reference wave, usually modelled as a plain wave, and the object wave being transmitted or reflected by the sample. It should be noted that these two sidebands carry the same information, and from a mathematical point of view, in spatial frequency space, these two sidebands are each other's point inverted copy after complex conjugation. In addition to the sidebands, the hologram or holographic image comprises the regular image information within the so-called central band (i.e., a base spatial spectrum), which represents the auto-interference of the object wave (with itself).

Figure 7 a schematic representation of such an arrangement. A holographic measurement may result in a capture of a camera image or hologram $H(\boldsymbol{R})$. The hologram $H(\boldsymbol{R})$ is Fourier transformed FT (two-dimensional Fourier transform) into an image spectrum $\tilde{H}(\boldsymbol{v})$ in the spatial frequency domain. The image spectrum $\tilde{H}(\boldsymbol{v})$ comprises a central band CB and two (identical) high order spatial spectra or sidebands SB+, SB-.

The inventors have surmised that the effect of stage-drift and reference-drift manifests itself in a different way for the sideband as compared to the central band. In the absence of stage-drift, the central band is related simply to the sideband, more specifically: in real space, where the acquisition takes place, the central band is the power (modulus squared) of the field of the sideband, whereas in Fourier space (after Fourier transformation of the hologram), the central band is the auto-correlation of the sideband. In the presence of stage-drift, these simple relationships do not hold anymore, and should be adapted in view of the different effects that the central band and sideband experience from the stage-drift and reference-drift.

By making use of the specific relationship between central band and sideband in the case of stage-drift, it is proposed that both the direction and magnitude of a stage-drift vector is derived under the approximation (assumption) of a uniform stage drift during the acquisition time of the hologram. With the knowledge of both the direction and the magnitude of a uniform stage drift, the measured sideband can be digitally corrected (in the context of computational imaging) for the effect of this stage drift via deconvolution of a stage-drift related envelope from the sideband. In an embodiment, both the direction and magnitude of a reference vector is derived under the approximation of a uniform reference drift and also used on determination of a stage-drift and reference-drift related envelope for correction of the sideband.

The uniform drift with a constant drifting speed may be denoted by a 2D in-plane vector $v_R$ for the lateral drift of the reference wave (reference drift), and by the 2D in-plane vector $v_S$ for the lateral drift of the sample stage (stage drift), both as manifested during the acquisition of the hologram in a time interval denoted by $\Delta t$.

Figure 8 schematically illustrates these drift vectors. An illumination beam IB is incident on an object at an object plane OP The resultant object beam is captured by imaging system IS. At an image/detector plane, a hologram comprising intensity $H(R)$ is formed from interference of an object image field of intensity $O(R)$ subject to uniform 2D object field drift vector $v_S$ and a reference field of intensity $P(R)$ subject to uniform 2D reference field drift vector $v_R$. It should be noted that the object field drift originates from the drift of the stage on which the sample (or object, e.g., a wafer comprising a target) is mounted. In the specific case of dark-field holography, the object image field $O(R)$ originates from a 1st order diffraction from a grating within the object.

The intensity of the hologram $H(R)$, by the time-averaging during the acquisition with duration $\Delta t$, may be mathematically described as:

$$H(\boldsymbol{R}) = \frac{1}{\Delta t} \int_{-\Delta t/2}^{+\Delta t/2} |P(\boldsymbol{R} + \boldsymbol{v}_R\, t) + O(\boldsymbol{R} + \boldsymbol{v}_S\, t).\exp\{2\pi i \boldsymbol{K}_O \cdot \boldsymbol{v}_S\, t\}|^2 \, dt$$

where $R$ is the 2D vector in the image plane where the hologram is recorded, $P(R)$ denotes the reference field, which may be approximated as a plane wave via $P(R) = \exp\{2\pi i\, K_R \cdot R\}$ where $K_R$ represents the (in-plane) wavevector of the (tilted) plane wave representing its relative tilt with respect to the object image field which is denoted by $O(R)$ and $K_O$ represents difference between the wavevector of the 1st order object beam (which is imaged) and that of the 0th order object beam (which is blocked).

As a consequence of this 1st order imaging, a shift of the object will not only result in a corresponding shift of the object image field, but also in an additional phase shift.

The hologram intensity can further be written out as a sum of four terms, with the first term being the auto-interference of the reference wave, which equals unity in this case; the second term is the positive sideband, which can be denoted by $SB^+(R)$, and which represents the interference of the object wave with the reference wave; the third term is the negative sideband to be denoted by $SB^-(R)$, and whose Fourier spectrum is the complex-conjugate of the point-inverted positive sideband; and the fourth term is the auto-interference of the object wave, which is called the central band, to be denoted by $CB(R)$. Therefore:

$$H(\boldsymbol{R}) = 1 + SB^+(\boldsymbol{R}) + SB^-(\boldsymbol{R}) + CB(\boldsymbol{R})$$

the time-averaging expression for the positive sideband may be:

$$SB^+(\boldsymbol{R}) = \frac{1}{\Delta t} \int_{-\Delta t/2}^{+\Delta t/2} \exp\{-2\pi i\, \boldsymbol{K}_R \cdot (\boldsymbol{R} + \boldsymbol{v}_R\, t)\}\, O(\boldsymbol{R} + \boldsymbol{v}_S\, t).\exp\{2\pi i \boldsymbol{K}_O \cdot \boldsymbol{v}_S\, t\} \, dt$$

and, equivalently, for the central band, the time-averaging expression maybe given by:

$$CB(\boldsymbol{R}) = \frac{1}{\Delta t} \int_{-\Delta t/2}^{+\Delta t/2} |O(\boldsymbol{R} + \boldsymbol{v}_S\, t)|^2 \, dt$$

In order to appreciate the difference in the effect of the stage-drift and reference-drift on sideband and central band, it is convenient to have a look at their respective 2D spatial Fourier transforms where the 2D spatial frequency coordinate in Fourier space is denoted by $v$ (note that the drifting speeds as defined above always carry a subscript, dependent on whether it concerns drift of the reference wave ($v_R$) or drift of the sample stage ($v_S$). The drift vectors can therefore always be distinguished from the spatial frequency vector denoted by $v$). For the sideband $\widetilde{SB}(v)$, the respective Fourier transforms are given by (with the Fourier transformed terms indicated by a tilde in short-hand notation):

$$\widetilde{SB}(v) \equiv \widetilde{SB}^+(v - K) = \tilde{O}(v) \, \text{sinc}[\pi\Delta t \, (v \cdot v_S + K_O \cdot v_S - K_R \cdot v_R)]$$

and, for the central band:

$$\widetilde{CB}(v) = \text{sinc}[\pi\Delta t \, v \cdot v_S] \int \tilde{O}(v + v') \, \tilde{O}^*(v') \, dv'$$

It should be noted that the sinc-functions reflect the attenuation in Fourier space of the respective amplitudes of the (transformed) sideband $\widetilde{SB}$ and center band $\widetilde{CB}$ and that the attenuation of the sideband $\widetilde{SB}$ depends on both stage drift of the sample (stage-drift) and drift of the reference wave (reference-drift), whereas the attenuation of the center band $\widetilde{CB}$ depends only on the stage drift of the sample. As such, in the sideband $\widetilde{SB}$, the object function $\tilde{O}(v)$ is the function directly affected by the sinc-based attenuation function, whereas in the central band, it is the auto-correlation function of the object function (and thus not the object function itself) that is directly affected by the sinc-based attenuation function.

As is well known, in the absence of any drift, the central band is simply the auto-correlation of the sideband, that is:

$$\widetilde{CB}(v) = \int \widetilde{SB}(v + v') \, \widetilde{SB}^*(v') \, dv'$$

Now, to describe the situation in the presence of drift from a mathematical perspective, in the presence of stage-drift the expression for the sideband is:

$$\widetilde{SB}(v) = \tilde{O}(v) \, \tilde{M}_{SB}(v; \, v_R; \, v_S)$$

with the damping envelope $\tilde{M}_{SB}(v; \, v_R; \, v_S)$ for the sideband due to the (e.g., stage-drift induced) motion blur being described by:

$$\tilde{M}_{SB}(v; \, v_R; \, v_S) = \text{sinc}[\pi\Delta t \, (v \cdot v_S + K_O \cdot v_S - K \cdot v_R)]$$

It should be noted here that once the damping envelope for the sideband due to the (e.g., stage-drift induced) motion blur is known, then it can be explicitly deconvolved from the measured sideband, so that the effect of motion blur is effectively removed in the sense of computational imaging.

Similarly, the central band in the presence of stage-drift is described by:

$$\widetilde{CB}(v) = \tilde{M}_{CB}(v; \, v_S) \int \tilde{O}(v + v') \, \tilde{O}^*(v') \, dv'$$

with the damping envelope for the central band due to the stage-drift induced motion blur:

$$\tilde{M}_{CB}(v; \, v_S) = \text{sinc}[\pi\Delta t \, v \cdot v_S]$$

As such, the intensity of the hologram can be measured and the experimentally measured values of sideband and central band derived (e.g. in Fourier space). The relation between sideband and central band in case of stage-drift and reference-drift is given by the following relation:

$$\widetilde{CB}(\boldsymbol{v}) = \int \widetilde{SB}(\boldsymbol{v} + \boldsymbol{v}') \, \widetilde{SB}^*(\boldsymbol{v}') \, \frac{\widetilde{M}_{CB}(\boldsymbol{v}; \, \boldsymbol{v}_S)}{\widetilde{M}_{SB}(\boldsymbol{v} + \boldsymbol{v}'; \, \boldsymbol{v}_R; \, \boldsymbol{v}_S) \, \widetilde{M}_{SB}(\boldsymbol{v}'; \, \boldsymbol{v}_R; \, \boldsymbol{v}_S)} \, d\boldsymbol{v}'$$

Using this relation, the stage drift parameters $\boldsymbol{v}_R$ and $\boldsymbol{v}_S$ (which comprise four real-valued parameters) can be determined; e.g., by fitting these 4 parameters over the region covered by the central band in spatial frequency space (i.e., Fourier space). In this way, the motion blur envelope can be determined and deconvolved from the measured sideband.

The same principles can be applied to 2-fold hologram multiplexing as described in the aforementioned WO2019197117A1.

Figure 9 is a flow diagram illustrating a method of correcting a holographic image according to an embodiment. A holographic camera image 900, as captured on a camera, is Fourier transformed FT (e.g., a two-dimensional Fourier transform) into an image spectrum 910 in the spatial frequency domain. This image spectrum 910 comprises a base spatial spectrum or central band CB and two (mutually related) high order spatial spectra or sidebands SB-, SB+. Using the relation for central band and sideband in the presence of stage drift provided above, the stage drift parameters $\boldsymbol{v}_R$ and $\boldsymbol{v}_S$ (four real-valued parameters) can be determined 920; e.g., using fitting techniques. At step 930, the side band damping envelope due to the stage-drift induced motion blur $\widetilde{M}_{SB}(\boldsymbol{v}; \, \boldsymbol{v}_R; \, \boldsymbol{v}_S)$ can be determined from the stage drift parameters $\boldsymbol{v}_R, \, \boldsymbol{v}_S$; e.g., using the sinc function for $\widetilde{M}_{SB}(\boldsymbol{v}; \, \boldsymbol{v}_R; \, \boldsymbol{v}_S)$ above. It may be appreciated that all other parameters of this function (additional to the now determined stage drift parameters $\boldsymbol{v}_R, \, \boldsymbol{v}_S$) are directly measurable or known. At step 940, either one of the sidebands can be corrected using the side band damping envelope. This may comprise dividing the sideband SB+ (or SB-) by the damping envelope in Fourier space; e.g., after first centering the sideband SB+ in the image spectrum. Optionally, this step may also comprise performing an aberration correction for any aberration in the optical system. A main motivation for originally devising a holographic metrology tool for use in lithography monitoring and/or control is that the access to amplitude and phase information that such a tool provides, makes it simpler to correct for aberrations in the optics (e.g., using methods such as described in WO2019197117A1, which is incorporated herein by reference). This enables a relaxation of the aberration performance requirements for the optics of such a tool. Following inverse Fourier Transformation IFT to a field in real space, the corrected sideband $SB_{corr}(\boldsymbol{R})$ may be converted to a corrected image 950 (e.g., by squaring the modulus of the sideband; i.e., $|SB_{corr}(\boldsymbol{R})|^2$).

Alternatively or in addition to correction of a sideband, the object-field stage drift parameter $\boldsymbol{v}_S$, determined at step 920 may be used to correct the center band (the center band information has some uses, as is well known). In such an embodiment, step 930 may comprise determining the center band damping envelope due to the stage-drift induced motion blur $\widetilde{M}_{CB}(\boldsymbol{v}; \, \boldsymbol{v}_S)$ from the object-field stage drift parameter $\boldsymbol{v}_S$; e.g., using the sinc function for $\widetilde{M}_{CB}(\boldsymbol{v}; \, \boldsymbol{v}_S)$ above. Step 940 may then comprise correcting the center band using the center band damping envelope (e.g., by deconvolution of the center band damping envelope from the transformed center band.

The methods disclosed herein can be used to estimate and correct motion blur via a computational approach in case of off-axis holography. By using this approach, the constraints on the stage requirements in a holographic metrology tool can be relaxed.

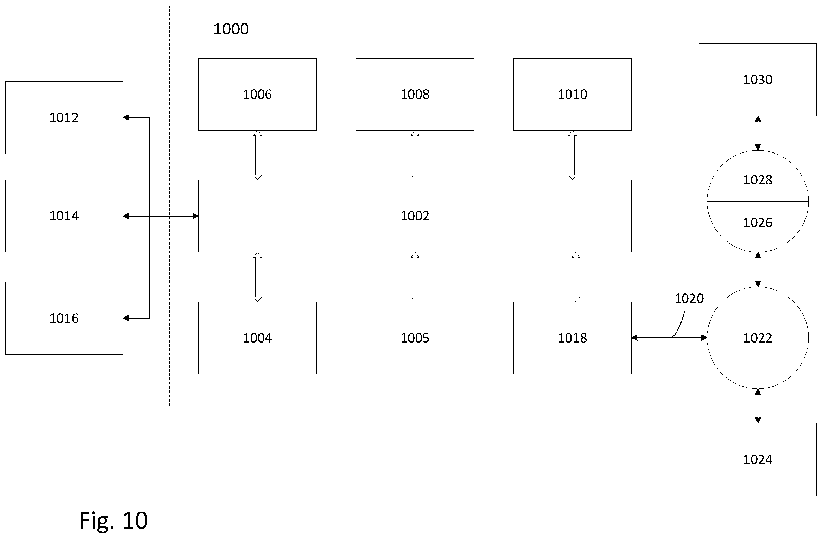

Figure 10 is a block diagram that illustrates a computer system 1000 that may assist in implementing the methods and flows disclosed herein. Computer system 1000 includes a bus 1002 or other communication mechanism for communicating information, and a processor 1004 (or multiple processors 1004 and 1005) coupled with bus 1002 for processing information. Computer system 1000 also includes a main memory 1006, such as a random access memory (RAM) or other dynamic storage device, coupled to bus 1002 for storing information and instructions to be executed by processor 1004. Main memory 1006 also may be used for storing temporary variables or other intermediate information during execution of instructions to be executed by processor 1004. Computer system 1000 further includes a read only memory (ROM) 1008 or other static storage device coupled to bus 1002 for storing static information and instructions for processor 1004. A storage device 1010, such as a magnetic disk or optical disk, is provided and coupled to bus 1002 for storing information and instructions.

Computer system 1000 may be coupled via bus 1002 to a display 1012, such as a cathode ray tube (CRT) or flat panel or touch panel display for displaying information to a computer user. An input device 1014, including alphanumeric and other keys, is coupled to bus 1002 for communicating information and command selections to processor 1004. Another type of user input device is cursor control 1016, such as a mouse, a trackball, or cursor direction keys for communicating direction information and command selections to processor 1004 and for controlling cursor movement on display 1012. This input device typically has two degrees of freedom in two axes, a first axis (e.g., x) and a second axis (e.g., y), that allows the device to specify positions in a plane. A touch panel (screen) display may also be used as an input device.

One or more of the methods as described herein may be performed by computer system 1000 in response to processor 1004 executing one or more sequences of one or more instructions contained in main memory 1006. Such instructions may be read into main memory 1006 from another computer-readable medium, such as storage device 1010. Execution of the sequences of instructions contained in main memory 1006 causes processor 1004 to perform the process steps described herein. One or more processors in a multi-processing arrangement may also be employed to execute the sequences of instructions contained in main memory 1006. In an alternative embodiment, hard-wired circuitry may be used in place of or in combination with software instructions. Thus, the description herein is not limited to any specific combination of hardware circuitry and software.

The term "computer-readable medium" as used herein refers to any medium that participates in providing instructions to processor 1004 for execution. Such a medium may take many forms, including but not limited to, non-volatile media, volatile media, and transmission media. Non-volatile media include, for example, optical or magnetic disks, such as storage device 1010. Volatile media include dynamic memory, such as main memory 1006. Transmission media include coaxial cables, copper wire and fiber optics, including the wires that comprise bus 1002. Transmission media can also take the form of acoustic or light waves, such as those generated during radio frequency (RF) and infrared (IR) data communications. Common forms of computer-readable media include, for example, a floppy disk, a flexible disk, hard disk, magnetic tape, any other magnetic medium, a CD-ROM, DVD, any other optical medium, punch cards, paper tape, any other physical medium with patterns of holes, a RAM, a PROM, and EPROM, a FLASH-EPROM, any other memory chip or cartridge, a carrier wave as described hereinafter, or any other medium from which a computer can read.

Various forms of computer readable media may be involved in carrying one or more sequences of one or more instructions to processor 1004 for execution. For example, the instructions may initially be borne on a magnetic disk of a remote computer. The remote computer can load the instructions into its dynamic memory and send the instructions over a telephone line using a modem. A modem local to computer system 1000 can receive the data on the telephone line and use an infrared transmitter to convert the data to an infrared signal. An infrared detector coupled to bus 1002 can receive the data carried in the infrared signal and place the data on bus 1002. Bus 1002 carries the data to main memory 1006, from which processor 1004 retrieves and executes the instructions. The instructions received by main memory 1006 may optionally be stored on storage device 1010 either before or after execution by processor 1004.

Computer system 1000 also preferably includes a communication interface 1018 coupled to bus 1002. Communication interface 1018 provides a two-way data communication coupling to a network link 1020 that is connected to a local network 1022. For example, communication interface 1018 may be an integrated services digital network (ISDN) card or a modem to provide a data communication connection to a corresponding type of telephone line. As another example, communication interface 1018 may be a local area network (LAN) card to provide a data communication connection to a compatible LAN. Wireless links may also be implemented. In any such implementation, communication interface 1018 sends and receives electrical, electromagnetic or optical signals that carry digital data streams representing various types of information.

Network link 1020 typically provides data communication through one or more networks to other data devices. For example, network link 1020 may provide a connection through local network 1022 to a host computer 1024 or to data equipment operated by an Internet Service Provider (ISP) 1026. ISP 1026 in turn provides data communication services through the worldwide packet data communication network, now commonly referred to as the "Internet" 1028. Local network 1022 and Internet 1028 both use electrical, electromagnetic or optical signals that carry digital data streams. The signals through the various networks and the signals on network link 1020 and through communication interface 1018, which carry the digital data to and from computer system 1000, are exemplary forms of carrier waves transporting the information.

Computer system 1000 may send messages and receive data, including program code, through the network(s), network link 1020, and communication interface 1018. In the Internet example, a server 1030 might transmit a requested code for an application program through Internet 1028, ISP 1026, local network 1022 and communication interface 1018. One such downloaded application may provide for one or more of the techniques described herein, for example. The received code may be executed by processor 1004 as it is received, and/or stored in storage device 1010, or other non-volatile storage for later execution. In this manner, computer system 1000 may obtain application code in the form of a carrier wave.

In this document reference is made to the term "damping envelope". The damping envelope is an envelope function applied to a central band CB and/or side band SB and which attenuates the signal levels in respective CB and/or SB. The value of the damping envelope is between 0 and 1. Alternatively, one can call the damping envelope a "amplitude envelope function". Specifically in the context of digital holography, the damping envelope can result in a reduction of fringe contrast in the hologram In other words, the envelope leads to a reduction in contrast.

Further embodiments are disclosed in the following list of numbered clauses:

1. A method of correcting a holographic image, comprising:

obtaining the holographic image;
determining at least one damping envelope due to motion blur from the holographic image; and
correcting the holographic image or a portion thereof using said at least one damping envelope.

2. A method as defined in clause 1, wherein said determining at least one damping envelope comprises:

transforming the holographic image to a spatial frequency domain to obtain a transformed holographic image; and
determining said at least one damping envelope for at least one portion of the transformed holographic image.

3. A method as defined in clause 2, wherein said step of determining at least one damping envelope comprises determining a sideband damping envelope for a sideband of the transformed holographic image.
4. A method as defined in clause 3, wherein said correcting step comprises deconvolving the sideband damping envelope from a sideband of the transformed holographic image to obtain a corrected sideband.
5. A method as defined in any of clauses 2 to 4, wherein:

said step of determining at least one damping envelope comprises determining a center band damping envelope for a center band of the transformed holographic image; and
said correcting step comprises deconvolving the center band damping envelope from the center band of the transformed holographic image to obtain a corrected center band

6. A method as defined in clause 4 or 5, comprising transforming the corrected sideband and/or corrected center band to real space and converting it to a corrected image.
7. A method as defined in any of clauses 2 to 6, wherein the determining at least one damping envelope step comprises determining at least one field drift vector related to stage drift of a metrology stage used in obtaining the holographic image; and
determining the damping envelope from said at least one field drift vector.
8. A method as defined in clause 7, wherein said determining at least one field drift vector comprises determining an object field drift vector and a reference field drift vector.
9. A method as defined in clause 8, wherein said determining an object field drift vector and a reference field drift vector comprises fitting for four real-valued parameters describing said object field drift vector and reference field drift vector over a region corresponding to the central band in said spatial frequency domain, so as to satisfy a relationship between the sideband and a central band of the transformed holographic image in the presence of stage drift and reference drift.
10. A method as defined in clause 7, wherein said relationship approximates the stage drift and reference drift as comprising a constant speed for each of said reference field drift vector and said object field drift vector during an acquisition time during which the holographic image was acquired.
11. A method as defined in any preceding clause, comprising performing off-axis holography to obtain said holographic image.
12. A computer program comprising instructions for a processor which cause the processor to perform the method of any preceding clause.
13. A processing device and associated program storage, said program storage comprising instructions for the processor which cause the processor to perform the method of any of clauses 1 to 11.
14. A dark field digital holographic microscope configured to determine a characteristic of interest of a structure, comprising:

an illumination branch for providing illumination radiation to illuminate said structure;
a detection arrangement for capturing object radiation resulting from diffraction of the illumination radiation by said structure;
a reference branch for providing reference radiation for interfering with the object beam to obtain a holographic image; and
the processing device of clause 13.

15. A dark field digital holographic microscope according to clause 14 configured as an off-axis dark field digital holographic microscope.
16. A metrology apparatus for determining a characteristic of interest of a structure on a substrate comprising a dark field digital holographic microscope as defined in clause 14 or 15.
17. An inspection apparatus for inspecting a structure on a substrate comprising a dark field digital holographic microscope as defined in clause 14 or 15.

Although specific reference is made to "metrology apparatus / tool / system" or "inspection apparatus / tool / system", these terms may refer to the same or similar types of tools, apparatuses or systems. E.g. the inspection or metrology apparatus that comprises an embodiment of the invention may be used to determine characteristics of structures on a substrate or on a wafer. E.g. the inspection apparatus or metrology apparatus that comprises an embodiment of the invention may be used to detect defects of a substrate or defects of structures on a substrate or on a wafer. In such an embodiment, a characteristic of interest of the structure on the substrate may relate to defects in the structure, the absence of a specific part of the structure, or the presence of an unwanted structure on the substrate or on the wafer

Although specific reference may be made in this text to the use of lithographic apparatus in the manufacture of ICs, it should be understood that the lithographic apparatus described herein may have other applications. Possible other applications include the manufacture of integrated optical systems, guidance and detection patterns for magnetic domain memories, flat-panel displays, liquid-crystal displays (LCDs), thin-film magnetic heads, etc.

Although specific reference may be made in this text to embodiments of the invention in the context of a lithographic apparatus, embodiments of the invention may be used in other apparatus. Embodiments of the invention may form part of a mask inspection apparatus, a metrology apparatus, or any apparatus that measures or processes an object such as a wafer (or other substrate) or mask (or other patterning device). These apparatus may be generally referred to as lithographic tools. Such a lithographic tool may use vacuum conditions or ambient (non-vacuum) conditions.

Although specific reference may have been made above to the use of embodiments of the invention in the context of optical lithography, it will be appreciated that the invention, where the context allows, is not limited to optical lithography and may be used in other applications, for example imprint lithography.

While specific embodiments of the invention have been described above, it will be appreciated that the invention may be practiced otherwise than as described. The descriptions above are intended to be illustrative, not limiting. Thus it will be apparent to one skilled in the art that modifications may be made to the invention as described without departing from the scope of the claims set out below.

**Claims**

1. A method of correcting a holographic image, comprising:

   obtaining the holographic image;
   determining at least one damping envelope due to motion blur from the holographic image; and
   correcting the holographic image or a portion thereof using said at least one damping envelope.

2. A method as claimed in claim 1, wherein said determining at least one damping envelope comprises:

   transforming the holographic image to a spatial frequency domain to obtain a transformed holographic image; and
   determining said at least one damping envelope for at least one portion of the transformed holographic image.

3. A method as claimed in claim 2, wherein said step of determining at least one damping envelope comprises determining a sideband damping envelope for a sideband of the transformed holographic image.

4. A method as claimed in claim 3, wherein said correcting step comprises deconvolving the sideband damping envelope from a sideband of the transformed holographic image to obtain a corrected sideband.

5. A method as claimed in any of claims 2 to 4, wherein:

   said step of determining at least one damping envelope comprises determining a center band damping envelope for a center band of the transformed holographic image; and
   said correcting step comprises deconvolving the center band damping envelope from the center band of the transformed holographic image to obtain a corrected center band

6. A method as claimed in claim 4 or 5, comprising transforming the corrected sideband and/or corrected center band to real space and converting it to a corrected image.

7. A method as claimed in any of claims 2 to 6, wherein the determining at least one damping envelope step comprises determining at least one field drift vector related to stage drift of a metrology stage used in obtaining the holographic image; and
   determining the damping envelope from said at least one field drift vector.

8. A method as claimed in claim 7, wherein said determining at least one field drift vector comprises determining an object field drift vector and a reference field drift vector, and,

   wherein, optionally, said determining an object field drift vector and a reference field drift vector comprises fitting for four real-valued parameters describing said object field drift vector and reference field drift vector over a region corresponding to the central band in said spatial frequency domain, so as to satisfy a relationship between the sideband and a central band of the transformed holographic image in the presence of stage drift and reference drift.

9. A method as claimed in claim 7, wherein said relationship approximates the stage drift and reference drift as comprising a constant speed for each of said reference field drift vector and said object field drift vector during an acquisition time during which the holographic image was acquired.

10. A method as claimed in any preceding claim, comprising performing off-axis holography to obtain said holographic image.

11. A processing device and associated program storage, said program storage comprising instructions for the processor which cause the processor to perform the method of any of claims 1 to 10.

12. A dark field digital holographic microscope configured to determine a characteristic of interest of a structure, comprising:

   an illumination branch for providing illumination radiation to illuminate said structure;
   a detection arrangement for capturing object radiation resulting from diffraction of the illumination radiation by said structure;
   a reference branch for providing reference radiation for interfering with the object beam to obtain a holographic image; and
   the processing device of claim 11.

13. A dark field digital holographic microscope according to claim 12 configured as an off-axis dark field digital holographic microscope.

14. A metrology apparatus for determining a characteristic of interest of a structure on a substrate comprising a dark field digital holographic microscope as claimed in claim 12 or 13.

15. An inspection apparatus for inspecting a structure on a substrate comprising a dark field digital holographic microscope as claimed in claim 12 or 13.

Fig. 1

Fig. 2

Fig. 3

Fig. 4

Fig. 5

Fig. 6

$H(\boldsymbol{R})$

$\tilde{H}(\nu)$

FT

SB+

CB

SB-

Fig. 7

Fig. 8

Fig. 9

Fig. 10

Europäisches
Patentamt

European
Patent Office

Office européen
des brevets

# EUROPEAN SEARCH REPORT

Application Number

EP 21 16 3900

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | MESSINIS CHRISTOS ET AL: "Diffraction-based overlay metrology using angular-multiplexed acquisition of dark-field digital holograms", OPTICS EXPRESS, vol. 28, no. 25, 7 December 2020 (2020-12-07), page 37419, XP055832417, US ISSN: 1094-4087, DOI: 10.1364/OE.413020 * the whole document * | 1-15 | INV. G03H1/00 G03H1/04 |
| Y | BARNARD JONATHAN S ET AL: "High-resolution scanning precession electron diffraction: Alignment and spatial resolution", ULTRAMICROSCOPY, ELSEVIER, AMSTERDAM, NL, vol. 174, 25 December 2016 (2016-12-25), pages 79-88, XP085044863, ISSN: 0304-3991, DOI: 10.1016/J.ULTRAMIC.2016.12.018 * the whole document * | 1-15 | |

TECHNICAL FIELDS
SEARCHED    (IPC)

G03H

The present search report has been drawn up for all claims

| Place of search | Date of completion of the search | Examiner |
|---|---|---|
| Munich | 17 August 2021 | Sittler, Gilles |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6952253 B
- US 20100328655 A
- US 2011102753 A1
- US 20120044470 A
- US 20110249244 A
- US 20110026032 A
- EP 1628164 A
- US 451599
- US 11708678 B
- US 12256780 B
- US 12486449 B
- US 12920968 B
- US 12922587 B
- US 13000229 B
- US 13033135 B
- US 13533110 B
- US 13891410 B
- WO 2011012624 PCT
- US 20160161863 A
- US 20160370717 A1
- US 2006033921 A1
- US 2010201963 A1
- US 2006066855 A1
- WO 2009078708 A
- WO 2009106279 A
- US 20110027704 A
- US 20110043791 A
- US 20120123581 A
- US 20130258310 A
- US 20130271740 A
- WO 2013178422 A1
- WO 2019197117 A1